(19) Europäisches Patentamt
European Patent Office
Office européen des brevets

(11) Publication number: **0 261 665 A2**

(12) **EUROPEAN PATENT APPLICATION**

(21) Application number: 87113915.0

(51) Int. Cl.⁴: **B62B 3/00**, B64F 1/32

(22) Date of filing: 23.09.87

(30) Priority: 24.09.86 US 911582

(43) Date of publication of application:
30.03.88 Bulletin 88/13

(84) Designated Contracting States:
AT BE CH DE ES FR GB GR IT LI LU NL SE

(71) Applicant: FMC CORPORATION
200 East Randolph Drive
Chicago Illinois 60601(US)

(72) Inventor: Gohier, Pierre R.
1122 East Country Woods Circle Unit D.
Midvale Utah 84047(US)

(74) Representative: Bardehle, Heinz, Dipl.-Ing. et al
Patent- und Rechtsanwälte
Bardehle-Pagenberg-Dost-Altenburg-Frohwitter-Geissler & Partner Postfach 86 06 20
D-8000 München 86(DE)

(54) **Baggage cart and method.**

(57) A plastic body for a baggage cart in which the body has floor and roof members, each of which is provided with extensions at either end. End wall members having complementary upper sockets engage the extensions on the roof member and are fastened together. Similar sockets on the lower portion of the end wall members engage the extension on the floor member. Fasteners secure the end wall member to the floor member and to the chasis of the baggage cart.

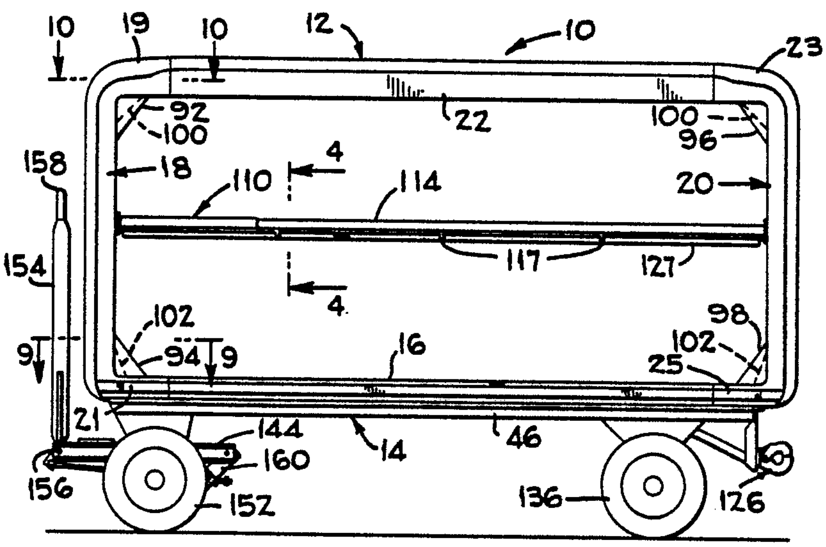


FIG_1

EP 0 261 665 A2

Xerox Copy Centre

# BAGGAGE CART AND METHOD

This invention relates to wheeled carts generally, and more particularly, to baggage carts, i.e., that type of cart used to transport luggage, packages and the like between aircraft and airport terminal facilities.

Baggage carts are typically subjected to rather severe use which results in dents and scratches. These carts, though often serviceable, must frequently be repaired and painted in order to present an acceptable appearance. The cost of maintenance is, therefore, relatively high for such a mechanically simple apparatus. The cost of shipment from place of manufacture to the airport facility for ultimate use is also inordinately high because the bulk of the shipped unit is high in relation to its weight.

The present invention solves or minimizes these problems by providing a baggage cart body that is rugged and durable but which may be quickly and easily repaired when damaged, does not require painting, and will not rust or corrode. The present invention also provides an under carriage for a baggage cart which permits unrestricted steering and which withstands forces imposed by trailing carts without transfer of such forces to the body. The baggage cart of the present invention permits shipping in a relatively small and compact volume, as well as easy assembly at the site of use. These and other advantages of the present invention will become more readily apparent from a perusal of the following description and the accompanying drawings, wherein:

Figure 1 is a side elevational view of a baggage cart according to the present invention;

Figure 2 is a front elevational view of the baggage cart in Figure 1;

Figure 3 is a rear elevational view of the baggage cart in Figure 1;

Figure 4 is a sectional view taken on line 4-4 of Figure 1;

Figure 5 is a sectional view taken on line 5-5 of Figure 4;

Figure 6 is a sectional view taken on line 6-6 of Figure 2;

Figure 7 is a sectional view taken on line 7-7 of Figure 2;

Figure 8 is a sectional view taken on line 8-8 of Figure 3;

Figure 9 is a sectional view, with portions broken away, taken on line 9-9 of Figure 1;

Figure 10 is a sectional view, with portions broken away, taken on line 10-10 of Figure 1; and

Figure 11 is a sectional view taken on line 11-11 of Figure 9.

Referring to Figures 1-3, there is shown a baggage cart, indicated generally at 10, which includes a body 12 mounted on an undercarriage 14. The body 12 is assembled from a floor member 16, front and rear end members 18 and 20, respectively, and roof member 22. The front end member 18 terminates in an upper, rearwardly-extending projection 19 and a lower, rearwardly-extending projection 21. Similarly, the rear end member 20 terminates in an upper, forwardly-extending projection 23 and a lower, forwardly-extending projection 25. Each of these members, 16, 18, 20 and 22, is molded from a plastic material, such as polyethylene, for example, by a process commonly called rotomolding, and is formed with a double-walled construction. Crosslinked polyethylene is preferred because it will produce a relatively flexible structure which is less likely to fracture on impact and which is less likely to damage aircraft in the event of incidental contact therewith. The roof member 22 is molded with an upper wall 24, as shown in Figure 6, and a lower wall 26. The lower wall 26 is provided with a plurality of conically-shaped indentations, commonly called kiss-offs, which extend to and join with the upper wall 24; one such kiss-off being shown at 28. The fore and aft ends of the roof 22 are each provided with a tongue of both reduced overall thickness and reduced width. The tongues on the fore and aft ends of the roof member 22 are complementary with and fit snugly into a groove formed at the top of each of the front and rear end members 18 and 20. Since the connection of the roof to each of the front and rear end members is similar, a description of the connection of the roof member 22 with the front end member 18, which connection is shown in Figure 6, will suffice for an understanding of the roof member to rear end member connection. An open groove 32 is formed at the top of the front end member 18 by the rearward angled extensions 33 and 35 of both the outer wall 34 and the inner wall 36 respectively of the front end member 18. The tongue 30 fits into the groove 32 and is fastened therein by a row of bolts 38, each passing through aligned holes in the extensions 33 and 35 and a hole through the apex of kiss-off 28 formed in the tongue 30. A centrally-bored spacer or plug 40, having a shape complementray with the kiss-off 28, is positioned in each of the kiss-offs 28 to prevent crushing the groove 32 and the tongue 30 when the bolt 38 is threaded into engagement with a nut 42. The spacer 40 is preferably made of a hard rubber material having a durometer in the range of 70 to 110, but preferrably 90, which can deform slightly under the compressive load of the nut and bolt to conform the spacer to the contours of the associated kiss-off and thereby distribute the compressive load over a wider area. Washers between the extensions 33 and 35 and the nut and bolt also may be used to distribute the load. The tongue 30 is preferably reduced in overall thickness, i.e. offset, at the top an amount sufficient to align the outer surface of the upper wall 24 of the roof with the outer surface of the angled outer wall of the end member 18 for a smoother and more attractive appearance. The tongue 30 is also reduced in overall thickness at its lower edge an amount sufficient to provide, in cooperation with the top offset, a guide for engagement of the ends of the extensions forming groove 32 with tongue 30 and thereby assist in aligning the holes in the sides of the groove with the holes in the apex of the kiss-offs 28 to facilitate insertion of the bolts 38.

The connections of the end members 18 and 20 to the floor 16 and undercarriage 14 are similar and a description of only the front end member thereto will suffice for an understanding of both. The undercarriage is provided with a pair of stringers 46 and 48 which extend substantially the length of the body 12. The floor 16 has an upper wall 50 and a lower wall 52 with a plurality of conically-shaped kiss-offs 54 extending from the lower wall 52 to and into contact with the upper wall 50. In addition to the kiss-offs 54, a plurality of kiss-throughs 56 are arranged in two rows, one row over each of the outward projecting flanges 58 and 60 of the stringers 46 and 48 respectively. The kiss-throughs 56 have inverted, frusto-conical walls molded in situ with, and joining the upper and lower walls. A complementary-shaped plug 62 is inserted into kiss-through 56 and has a countersunk central bore to accept a flat-headed bolt 64. The plug 62 is made of a hard rubber material similar to the material used for the spacer 40 and extends through the associated Kiss-through but not into direct engagement with the flange 58 or 60, the smallest diameter of the plug 62 being larger than the smallest diameter of the kiss-through 56. The bolt 64 also extends through a hole in the associated flange and a washer, to threadedly engage a nut 66. When the bolt and nut are tightened, the rubber plug 62 is wedged into tight engagement with the kiss-through to hold the floor 16 securely to the stringers 46 and 48. The floor 16 also includes a tongue on each end, the foward tongue being shown at 68, of reduced overall thickness and width. The tongue 68 fits into a groove formed by the inward projections 70 and 72 of the lower ends of the outer and inner walls 34 and 36 respectively. The tongue 68 mates snugly with the groove formed by the projections 70 and 72 with both the upper and lower surfaces of the resulting joint being smooth and in the same plane. There is no connection between the floor member 16 and the end member 18 other than the snug fit of the tongue and groove connection described above. Instead, the inward projections 70 and 72 are provided with a row of kiss-throughs 74, similar to kiss-through 56, extending along the front of the body 12. A hard rubber plug 76, similar to plug 62, is inserted in each kiss-through 74 with a flat-headed bolt 78 extending through the plug 76 and appropriately positioned holes in the flanges of the stringers 46 and 48. A nut 80 threadedly engages each bolt 78 and fastens the end wall 18 to the stringers 46 and 48 in the same manner as the floor 16 is attached thereto. The leading edges of the tongue 68 is notched, as indicated at 82 in Figure 9, at each of the kiss-through 74 to permit the tongue 68 to penetrate as deeply as possible into the groove formed by the projections 70 and 72. The floor member 16 is therefore positively fastened to the undercarriage 14 as are the end members, while still permitting the end members to flex and move slightly relative to the floor member.

The end members 18 and 20 are the only structural members supporting the roof member 22. Starting and stopping the cart 10 will impose bending loads on the end members as a function of the acceleration forces, the mass of the roof member 22 and the distance of the roof vertically above the stringers 46 and 48. These bending loads are not as significant, however, as the bending loads imposed by luggage and the like carried within the body, especially when such luggage is supported on a shelf suspended between the end members intermediate their vertical height. Even in the absence of movement, any static load carried by a shelf, to be described hereinafter, must be transmitted by the end members 18 and 20 to the undercarriage 14. The outer corners of the end members are important factors in resisting both the bending movements created by acceleration and static loads resulting from luggage supported on a shelf. One reason is the shape of the cross-section, i.e., the moment of inertia of the outer corner, which is created by a vertical groove, such as is shown at 81 in Figure 9 and 11, forming an outer flange 83. The vertical channel 81 meets and is contiguous with a groove 85 formed in the rearward-extending lower projection 21. The groove 85 is also contiguous with a groove 87 formed in the floor member 16. Similar grooves are formed in the upper projections and the roof members and are arranged to accept and retain a suitable track for suspension of a curtain to cover the openings in the sides of the body 12. The grooves 85, which is exemplary, is provided with a pair of kiss-throughs one of which is shown at 88 in Figure 11. A shoulder bolt 89 extends through the kiss-through 88 and an aligned hole formed in the outer flange 58 and engages a nut 91. The length of the shoulder on the bolt 89 is just slightly less than the thickness or height of the kiss-through 88 so that the outer edge of the lower projection 21 is held securely to the flange 58 without crushing the projection in the area of the kiss-through 88. A gusset 94 extends from the outer flange 83 and a flange 93 formed on the projection 21 by the groove 85. Gussets are also provided at 92 where corresponding portions of the vertical front end member 18 and the upper projection 19 meet and at 96 and 98 for the junction of the rear member 20 with the upper and lower projections 23 and 25 respectively.

The body 12 is thus assembled from four components - a floor member 16, front and rear members 18 and 20 respectively, and a roof member 22. Except for the fastener means, the basic body is composed entirely of plastic molded parts which permits any desired color to be incorporated during the molding operation. Incorporation of the color during the molding operation provides a structure in which minor scratches and nicks will be less noticeable. The hollow double-walled construction with uniformly distributed kiss-offs connecting the two provides a light weight, yet strong and durable body. The roof 12 may be rounded or pitched to the outside to shed rain, as shown in Figures 2 and 3, with rain gutters 84 and 86 molded along the outer edges to prevent water from running onto the baggage or personnel loading and unloading it. The gutters lead into channels 88 and 90 molded in the outer surface of the top of the end members 18 and 20 respectively to direct water away from the baggage area. Any water that does enter the body 12 will drain through holes 90 extending through floor member 16. The holes 90 are formed like the kiss-throughs but have cylindrical walls and are positioned along the center of the floor which is pitched or sloped downward toward the center to assist not only with drainage but also in retaining baggage during transit. The rain gutter 86 also provides stiffness and strength to the roof member 22. The two end members 18 and 20 are essentially C-shaped when viewed from the side and are stiffened by gussets 92, 94, 96 and 96 positioned at the outside corners to tie the vertical portion into the horizontal portion of each end member. Additionally, the rounded outer corners of each end member are interrupted with angled flat portions, 100 at the top and 102 at the bottom. The end members may also be molded with defined areas, on the outer vertical surfaces, which are slightly depressed and of a smoother texture, such as indicated at 104 for the...

A shelf, indicated generally at 110 in Figures 4 and 5, is suspended between the end members 18 and 20. Each of the end members 18 and 20 are provided with two molded sockets 112. Two metal tubes 114 and 115 span the end members with their ends positioned in the aligned sockets 112. A metal grid 117, including a central spine member 127, is secured to and suspended below the tubes 114 and 115, and provides a level bridge spanning and inter-connecting the tubes 114 and 115. A flange 116 is attached near each end of the tubes 114 and 115, which flanges are fastened to a boss 113 molded into the inner wall 36 around the sockets 112. A shelf member 118 which may be molded of double-walled plastic with a smooth upper wall 119 and a fluted or corrogated lower wall 121 hooks over the two tubes and rests upon the grid 117. The upper wall slopes downward toward the center to assist in retaining luggage during transit and to direct rain water toward a central trough 125 for controlled disposal.

The undercarriage 14 includes the two stringers 46 and 48 which are spaced apart and run fore and off substantially the length of the body 12. Each stringer has an inverted hat cross section for bending strength with a short inward projecting flange and a longer outer projecting flange terminating in a downward projecting lip along the outer edges. The lip is positioned adjacent and extends along the fore and aft extending edges of the floor member 16. An angle 120 having a height at least equal to the depth of the hat section is attached to the rear end of the stringers 46 and 48 and extends across the width of the cart. A trapezoidal plate 122 is secured along its upper edge to, and centrally of, the angle 120. The non-parallel edges of the trapezoidal plate 122 may be provided with stiffening flanges 124. A conventional hitch 126 is bolted to the plate 122 and is capable of releaseably securing the tow bar of another cart. The lower end of the plate 122 is stabilized by angled brackets 128 secured between the plate 122 and a cross beam 130 secured to both of the stringers 46 and 48 and to the suspension brackets 132 connecting the stringers to a rigid rear axle 134. Wheels 136 are rotatably mounted on each end of the axle 134. Forces imposed on the hitch 126 by trailing carts as a result of rolling resistance and acceleration, as well as those forces incurred when the tow tractor is braking will be transmitted through the hitch 126 to the stringers 46 and 48 without being transferred to or through either the body 12 or the rear axle 134.

...rward end of the stringers 46 and 48 are ...) a truncated pyramidal box section 136 ...ıdes a lower plate 138. One race of a ...g 140, which preferrably is of the type ...n U.S. Patent No. 4,316,305, is bolted to



...esulting aligned ...ng the slot and ...body together

a hitch attached to said stringer means and capable of releaseably securing one of said other carts.

...ferred embodiment includes

the lower plate 138. The other race of the bearing 140 is secured to stacked plates 142 attached between a pair of channels 144 and 146. The plates 142 are secured to an axle 148 with a triangular reinforcing gusset 150 secured between the axle 148 and the lower of plates 142. Wheels 152 are rotatably mounted on each end of the axle 148 and support the cart 10 on the ground. The bearing 140 is centered on both the axle 148 and the cart body 12 to form a wagon steer arrangement. A tow bar 154 is pivotally mounted by bushings on a rod 156 extending between the channels 144 and 146. A ring 158 attached at the free end of the tow bar permits attachment to the hitch of a tow tractor or another cart.

The tow bar 154 applies a parking brake when raised to the park position shown in Figures 1 and 2 and releases the brake when lowered to a tow position. The brake comprises a pair of links 160 and 162 which are pivotally attached to the channels 144 and 146 respectively. A heavy angle 164 is secured to the links 160 and 162 and extends beyond the links so that the ends are positioned behind the tires of wheels 152, which tires preferrably are of the solid or semi-solid type. Pad elements 166 are attached to the ends of the angle 164 for engagement with the tires. A rod 168 extends through a hole in the angle 164 and openings through the axle 148 and is pivotally attached by pin 170 to an arm 172 secured to the tow bar 154 to form a bell crank therewith. A compression spring 174 is trapped on the other end of the rod 168 between a loosely carried washer 176 too large to pass through the hole in angle 164 and a washer 178 abutting a nut 180 engaging the threaded end of the rod 168. When the tow bar 154 is raised to the position shown, the rod 168 is moved to the left forcing the pad elements 166 into engagement with the tires on the wheels 152. When the tow bar 154 is moved to a tow position, the arm 172 moves the rod 168 to the right releasing the brake; the links 160 and 162 being forced away from the tires by a washer 190 welded to the rod and engageable with the angle 164 as the rod 168 is moved to the right. The parking brake has the advantage of simplicity and low cost. There are few parts required and advantage is taken of the long tow bar to apply the brake. This is necessary because no mechanical advantage is provided by the links 160 and 162, which function merely as a means to position the brake pad elements 166 adjacent to or remote from the wheel 152 and to transmit reaction forces to the draft structure. Because there is no mechanical advantage, the spring 174 must have a high spring constant and a large force must be applied to the rod 168 to compress the spring and act the brake. The tow bar 154 provides a long lever arm so that an operator need not exert a large manual force. A conventional, pedal-release latch (not shown) may be provided to hold the tow bar in its park position, as shown in Figure 7, with the parking brake applied.

The double-walled construction for the floor, roof and end members provides a light weight, durable and yet relatively strong and rigid assembly. Each of these members has the kiss-offs arranged so that the most visible surfaces are smooth, i.e., the roof and end members have the kiss-offs on their inner walls, while the lower wall of the floor member contains the kiss-offs. Thus, the upper surface of the floor is smooth which is necessary for efficient loading and unloading of luggage and the like, and maintains an attractive appearance because there are no kiss off depressions on the upper surface to accummulate dirt and debris. The outer surfaces of the roof and end member are also smooth with an attractive apperance. The inner surfaces of these members will, of course, be indented. Should a smooth appearance on the interior be desired, complementary-shaped plugs may be positioned in each of the kiss-offs and retained therein with an adhesive, for example.

The cart body may be shipped in a knocked down or un-assembled condition; the various parts being arranged and packaged in a much smaller volume than when fully assembled, thereby reducing shipping costs. The assembly procedure is relatively simple. The floor member 16 is positioned on the undercarriage 14, and the plugs 62 inserted in kiss-throughs 56. The bolts 64 are inserted and loosely engaged with the nuts 66. The end members 18 and 20 are each assembled to the floor member 16 with the tongues on each end thereon engaging the grooves in the end members. The plugs 76 are inserted in the kiss-throughs and the fasteners loosely tightened. The shelf is installed by inserting the tubes 114 and 115 in the sockets by springing the end members sufficiently to permit insertion. The spacers 40 are then inserted in the kiss-offs 28 and the roof member 22 is then assembled to the end members with the roof tongues engaging the grooves in the end members. The fasteners with the undercarriage are than tightened fastening the floor and end members thereto, with care taken that the end members are fully seated against the floor member. The fasteners are then inserted and tightened in the roof member. Since there will be tolerance variations in the various plastic members, it is desirable to accommodate those variations in the final roof connections. By slotting the inner projections 35 and then drilling through the outer wall of the tongue 30 and the outer projection 33, using the hole through the spacer 40 as a guide, the bolts 38 can then be dropped through the resulting aligned holes with the lower washer bridging the slot and the nuts 42 tightened to secure the body together as a unit.

Although the best mode contemplated for carrying out the present invention has been shown and described herein, it will be apparent that modifications and variations may be made without departing from the spirit of the invention as defined by the scope of the appended claims.

The following part of the description describes a combination of features of prefered embodiments of the invention:

a) a first prefered embodiment relates to an undercarriage for a bag cart intended for interconnection with another cart to form a train of carts; said undercarriage comprising:
stringer means;
a tower assembly secured to said stringer means;
a turntable bearing having relatively rotatable elements, one of said elements secured to said tower assembly;
a steerable front axle secured to the other of said elements;
a tow bar pivotally secured to said front axle assembly;
a rear axle assembly attached to said stringer means; and
a hitch attached to said stringer means and capable of releaseably securing said another cart;
whereby forces imposed on one of said tow bar and hitch are transmitted through said stringer means to the other of said tow bar and hitch.

b) a further prefered embodiment includes the features of the embodiment according to item a) wherein said bearing defines a plane or rotation which plane is substantially aligned with the pivotal attachment of said tow bar to said front axle assembly, whereby bending loads on said bearing are minimized.

c) A further prefered embodiment relates to a baggage cart having a body and intended to be selectively coupled with other carts to form a train of carts, said baggage cart comprising:
stringer means extending substantially the length of said body and capable of attachment thereto;
a tower assembly secured to said stringer means;
a turn table bearing having relatively rotatable elements, one of which is secured to said tower assembly;
a steerable front axle secured to the other of said elements;
a tow bar pivotally secured to said front axle assembly;
a rear axle assembly attached to said stringer means; and
a hitch attached to said stringer means and capable of releaseably securing one of said other carts.

d) A further prefered embodiment includes the features of the embodiment according to item c) wherein said turntable bearing is a ball bearing having a diameter which is less than one quarter the race diameter.

e) A further prefered embodiment includes the features of the embodiment according to item c) wherein said body is composed substantially entirely of plastic material.

f) A further prefered embodiment includes the features of the embodiment according to item c) wherein said body comprises:
a plastic floor;
a plastic roof;
a pair of plastic end walls capable of mating and interlocking with said floor and roof; and
fastening means to secure said end walls to said floor and roof.

g) A further prefered embodiment includes the features of the embodiment according to item f) wherein said stringer means comprises a pair of metal members positioned parallel to each other with each member having a substantially U-shaped cross section with an integral arm extending toward the other member and an intergral arm extending away from the other member and terminating in a downward extending flowage positioned under the outer edge of said body.

h) A further prefered embodiment includes the features of the embodiment according to item c) wherein said body comprises:
a double-walled plastic floor secured to said stringer means;
a double-walled plastic roof;
a pair of double walled plastic end members having upward lower transverse extensions;
said roof and said upper extension having upper grooves and the other having upper tongues together with said groves;
one of said floor and said lower extension having lower grooves and the other having lower tongues enjoyable with said lower grooves; and
means for fastening said roof to said end members with said upper tongues and grooves engaged, and for fastening said floor and end member to said stringer means with said lower tongues and grooves engaged.

i) a further prefered embodiment includes the features of the embodiment according to item c) wherein said body comprises:
a double-walled plastic floor secured to said stringer means;
a double-walled plastic roof;
a pair of double-walled plastic end members;
each end member having upper and lower transverse extensions capable of mating with the adjacent ends of said roof and floor respectively; and fastener means for securing said extensions to said roof and said stringer means.

j) a further prefered embodiment includes the features of the embodiment according to item i) wherein each of said roof and end members having an outer wall and an inner wall with a plurality of depressions extending toward and connected with said outer wall.

k) a further prefered embodiment includes the features of the embodiment according to item i) wherein said floor has an upper wall and a lower wall with a plurality of depressions extending toward and connected with said upper wall.

l) a further prefered embodiment includes the features of the embodiment according to item j) wherein said depressions are conically shaped and a complementary shaped filler member is secured in each depression.

m) a further prefered embodiment includes the features of the embodiment according to item i) and comprises further:
a plurality of sockets formed in each of said end members;
a plurality of metal tubes inserted into and extending between the complementary sockets in each end member; and
a plastic shelf extending over and supported by said tubes.

n) a futher prefered embodiment relates to a plastic body for mounting on an undercarriage to form a baggage cart comprising:
a floor member molded of plastic and having upper and lower walls formed in situ with a plurality of depressions in the lower wall extending to and connected with the upper wall;
a pair of end wall members molded of plastic and having inner and outer walls formed in situ with a plurality of depressions in the inner wall extending to and connected with the outer wall;
transverse extending upper and lower extensions formed on each end wall member;
a roof member molded of plastic and having top and bottom walls formed in situ with a plurality of depressions in the bottom wall extending to and connected with the top wall; and
each end of said roof and floor member complementary to and engageable with said extension.

o) a further prefered embodiment includes the features of the embodiment according to item n and comprises further:
means for securing said floor member to said undercarriage; and
separate means for securing the lower extension to said undercarriage.

p) a further prefered embodiment includes the features of the embodiment according to item o) wherein said separate means comprises:
conically shaped depressions in said extension;
a complementary shaped rigid filler member in each of said conically shaped depressions; and
a bolt extending through each of said assembled depression and filler member and said undercarriage.

q) a further embodiment relates to a method of assembling a cart body to an undercarriage wherein the body includes floor, roof and interlocking front and rear end members, comprising the steps of:
loosely securing the floor member to the undercarriage;
fitting the end members to the floor member and loosely securing the end members to the undercarriage;
fitting the roof membre to the end members;
tightening the connections of the floor and end members to the undercarriage, and
securing the roof member to the end members.

r) a further prefered embodiment includes the features of the embodiment according to item q), wherein the body includes a shelf and further comprising:
fitting said shelf to said end members before fitting the roof member to said end members.

s) a further embodiment relates to a brake arrangement for a cart having a tow bar pivotally attached to a draft structure supported on an axle having a rubber tired wheel on each end thereof, said brake comprising:
a bell crank lever secured to said tow bar;
a rod pivotally attached to said lever;
link means pivotally attached to said structure;
a cross bar attached to said link means and extending to said wheels;
brake pad means carried by said cross bar and engageable with said wheels;
said cross bar having an opening through which said rod extends;
a washer loosely positioned on said rod and engageable with said cross bar;
a compressor spring on said rod; and returing means carried on rod.

## Claims

1. An undercarriage for a bag cart intended for interconnection with another cart to form a train of carts; said undercarriage comprising:
stringer means;
a tower assembly secured to said stringer means;
a turntable bearing having relatively rotatable elements, one of said elements secured to said tower assembly;
a steerable front axle secured to the other of said elements;
a tow bar pivotally secured to said front axle assembly;
a rear axle assembly attached to said stringer means; and
a hitch attached to said stringer means and capable of releaseably securing said another cart;
whereby forces imposed on one of said tow bar and hitch are transmitted through said stringer means to the other of said tow bar and hitch.

2. The invention according to claim 1 wherein said bearing defines a plane of rotation which plane is substantially aligned with the pivotal attachment of said tow bar to said front axle assembly, whereby bending loads on said bearing are minimized.

3. A baggage cart having a body and intended to be selectively coupled with other carts to form a train of carts, said baggage cart comprising:
stringer means extending substantially the length of said body and capable of attachment thereto;
a tower assembly secured to said stringer means;
a turn table bearing having relatively rotatable elements, one of which is secured to said tower assembly;
a steerable front axle secured to the other of said elements;
a tow bar pivotally secured to said front axle assembly;
a rear axle assembly attached to said stringer means; and
a hitch attached to said stringer means and capable of releaseably securing one of said other carts.

4. The invention according to claim 3 wherein said body comprises:
a plastic floor;
a plastic roof;
a pair of plastic end walls capable of mating and interlocking with said floor and roof; and
fastening means to secure said end walls to said floor and roof.

5. The invention according to claim 4, wherein said stringer means comprises a pair of metal members positioned parallel to each other with each member having a substantially U-shaped cross section with an integral arm extending toward the other member and an intergral arm extending away from the other member and terminating in a downward extending flowage positioned under the outer edge of said body.

6. The invention according to claim 3 wherein said body comprises:
a double-walled plastic floor secured to said stringer means;
a double-walled plastic roof;
a pair of double walled plastic end members having upward lower transverse extensions;
said roof and said upper extension having upper grooves and the other having upper tongues together with said grooves;
one of said floor and said lower extension having lower grooves and the other having ower tongues enjoyable with said lower grooves; and
means for fastening said roof to said end members with said upper tongues and grooves engaged, and for fastening said floor and end member to said stringer means with said lower tongues and grooves engaged.

7. The invention according to claim 3 wherein said body comprises:
a double-walled plastic floor secured to said stringer means;
a double-walled plastic roof;
a pair of double-walled plastic end members;
each end member having upper and lower transverse extensions capable of mating with the adjacent ends of said roof and floor respectively; and
fastener means for securing said extensions to said roof and said stringer means.

8. A plastic body for mounting on an undercarriage to form a baggage cart comprising:
a floor member molded of plastic and having upper and lower walls formed in situ with a plurality of depressions in the lower wall extending to and connected with the upper wall;
a pair of end wall members molded of plastic and having inner and outer walls formed in situ with a plurality of depressions in the inner wall extending to and connected with the outer wall;
transverse exending upper and lower extensions formed on each end wall member;
a roof member molded of plastic and having top and bottom walls formed in situ with a plurality of depressions in the bottom wall extending to and connected with the top wall; and
each end of said roof and floor member complementary to and engageable with said extension.

9. A method of assembling a cart body to an undercarriage wherein the body includes floor, roof and interlocking front and rear end members, comprising the steps of:
loosely securing the floor member to the undercarriage;
fitting the end members to the floor member and loosely securing the end members to the undercarriage;
fitting the roof member to the end members;
tightening the connections of the floor and end members to the undercarriage, and
securing the roof member to the end members.

10. A brake arrangement for a cart having a tow bar pivotally attached to a draft structure supported on an axle having a rubber tired wheel rotatable on each end thereof, said brake comprising:
a bell crank lever secured to said tow bar;
a rod pivotally attached to said lever;
link means pivotally attached to said structure;
a cross bar attached to said link means and extending to said wheels;
brake pad means carried by said cross bar and engageable with said wheels;
said cross bar having an opening through which said rod extends;
a washer loosely positioned on said rod and engageable with said cross bar;
a compressor spring on said rod; and returing means carried on rod.

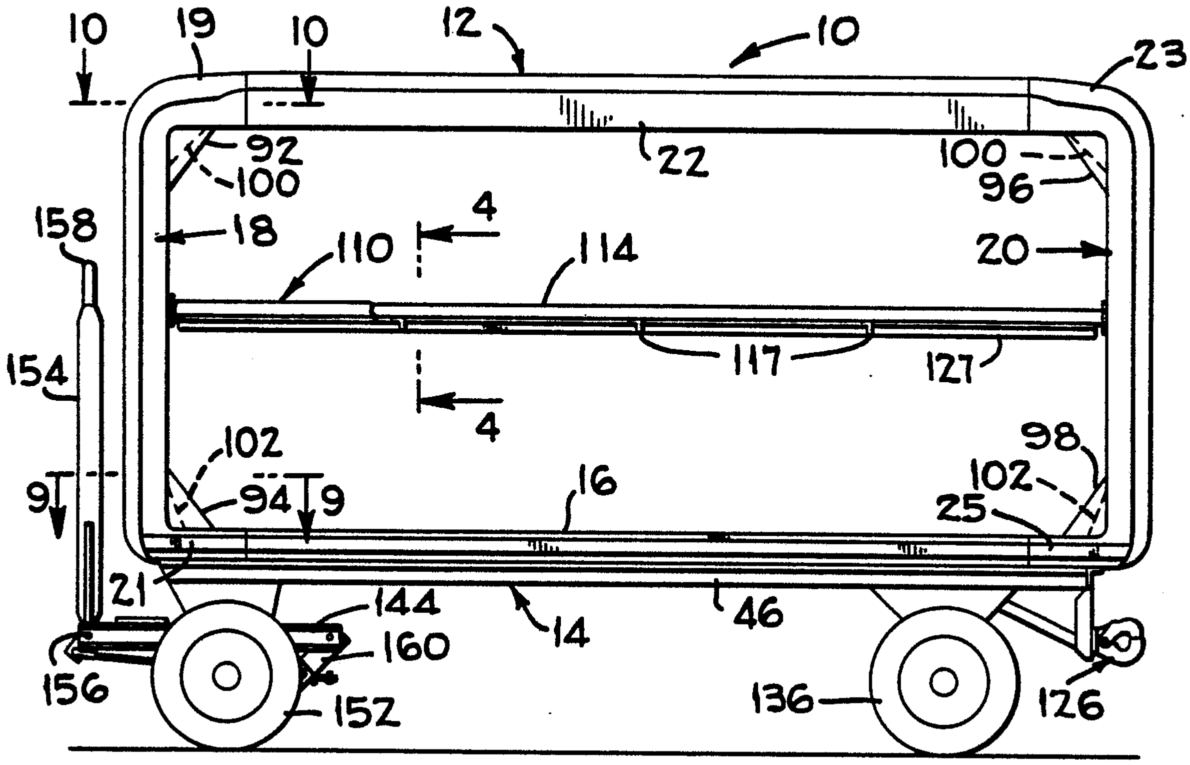


FIG_1

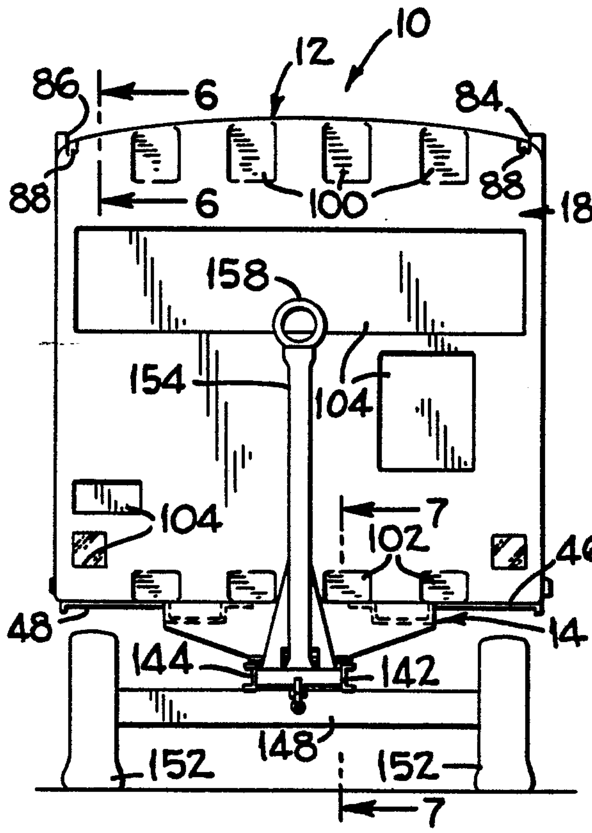


FIG_2

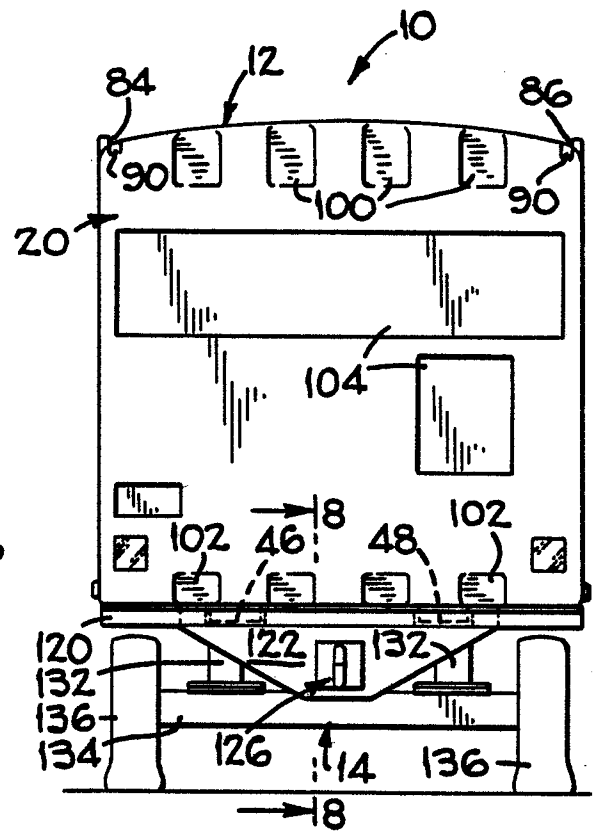


FIG_3

FIG_4

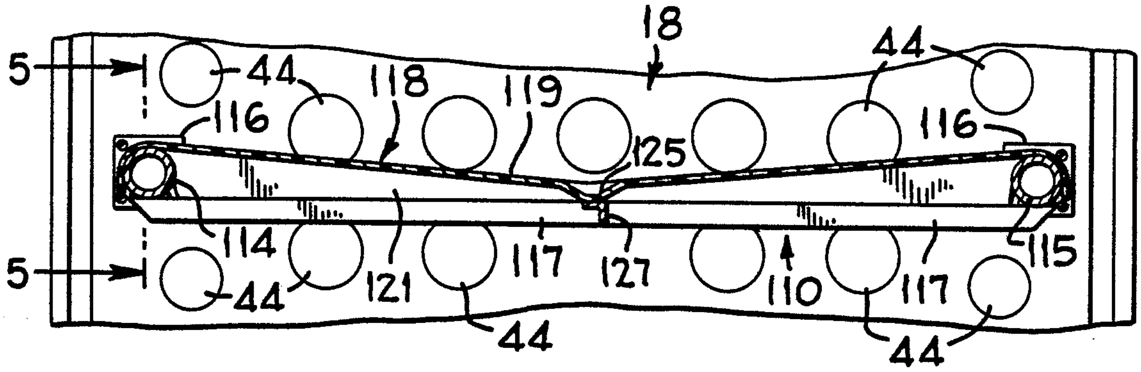


FIG_5

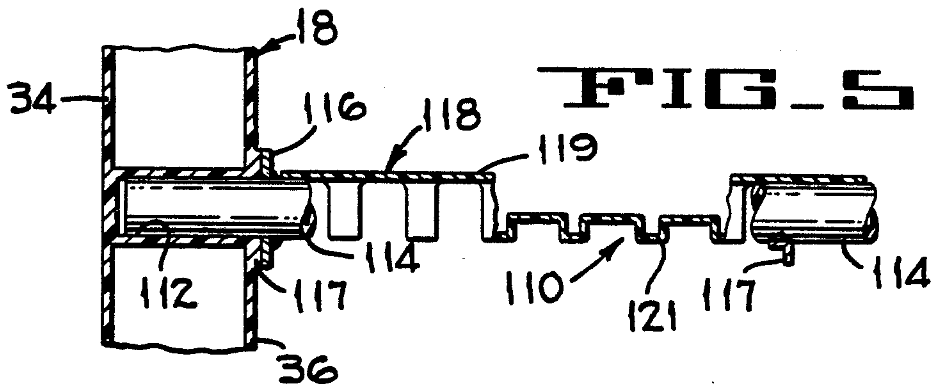


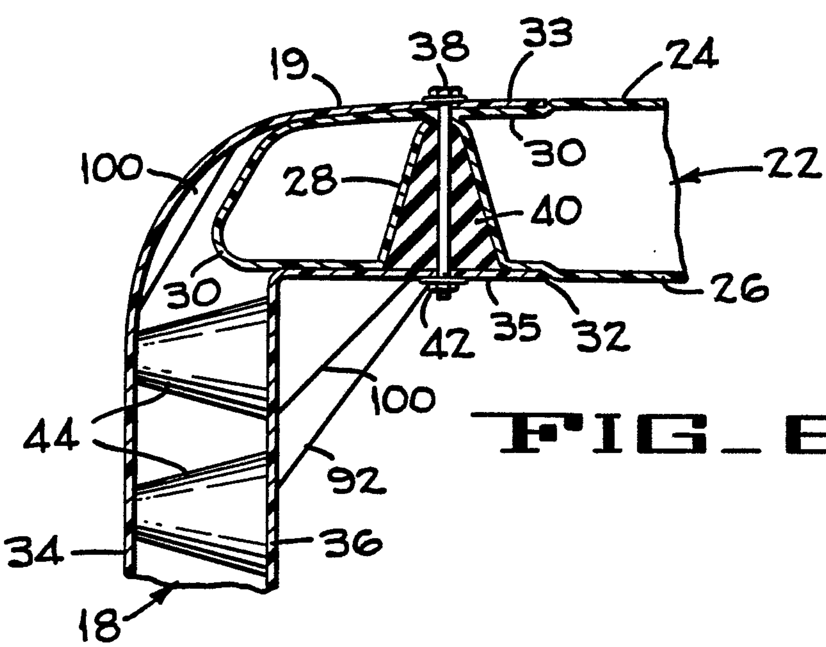


FIG_6

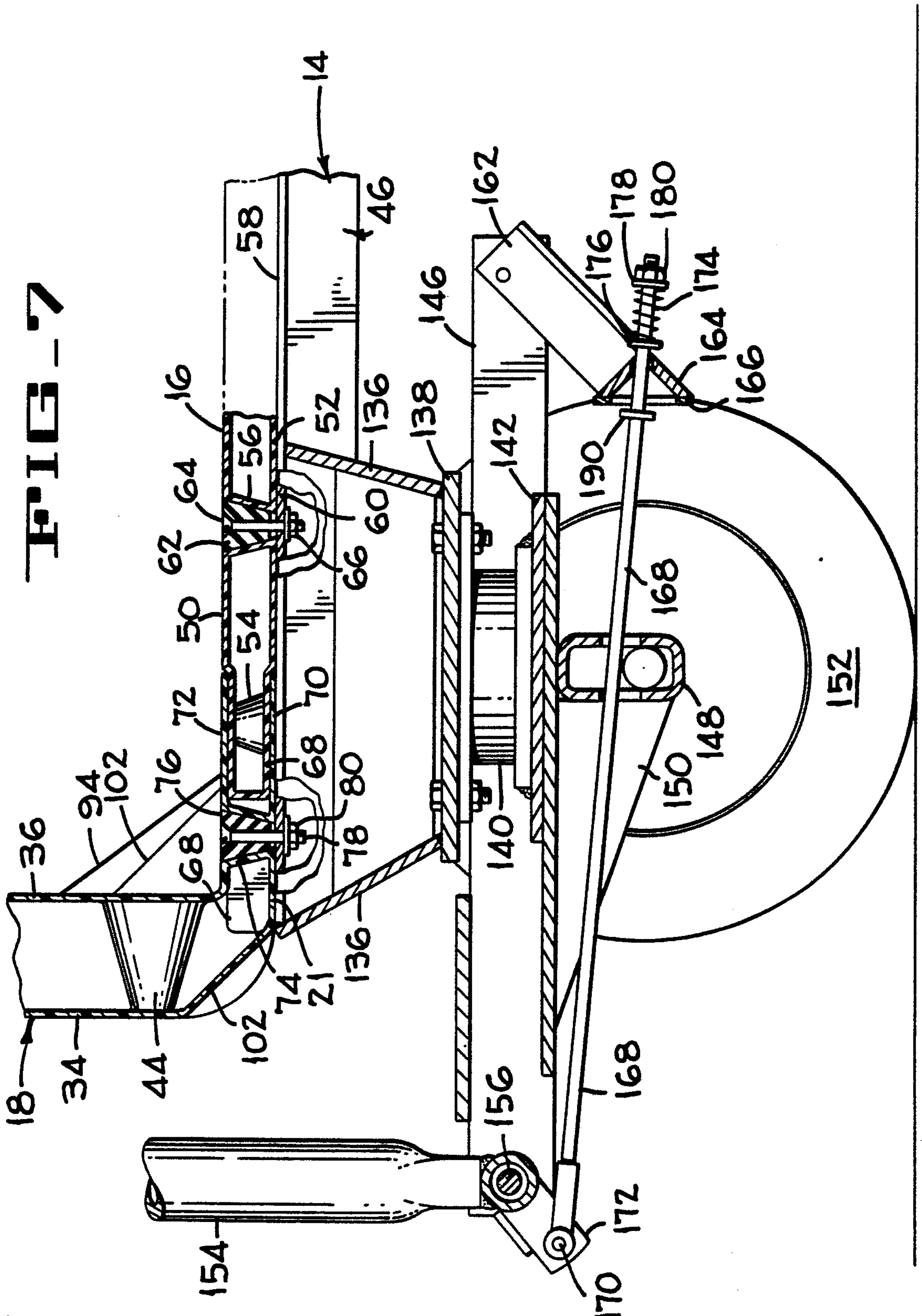
14
46
58
16
52
136
138
146
162
176
178
180
174
164
166
190
142
56
64
62
60
66
50
54
72
70
68
80
76
94
102
36
68
78
140
168
148
150
152
74
21
136
102
44
34
18
156
154
172
170

FIG_7

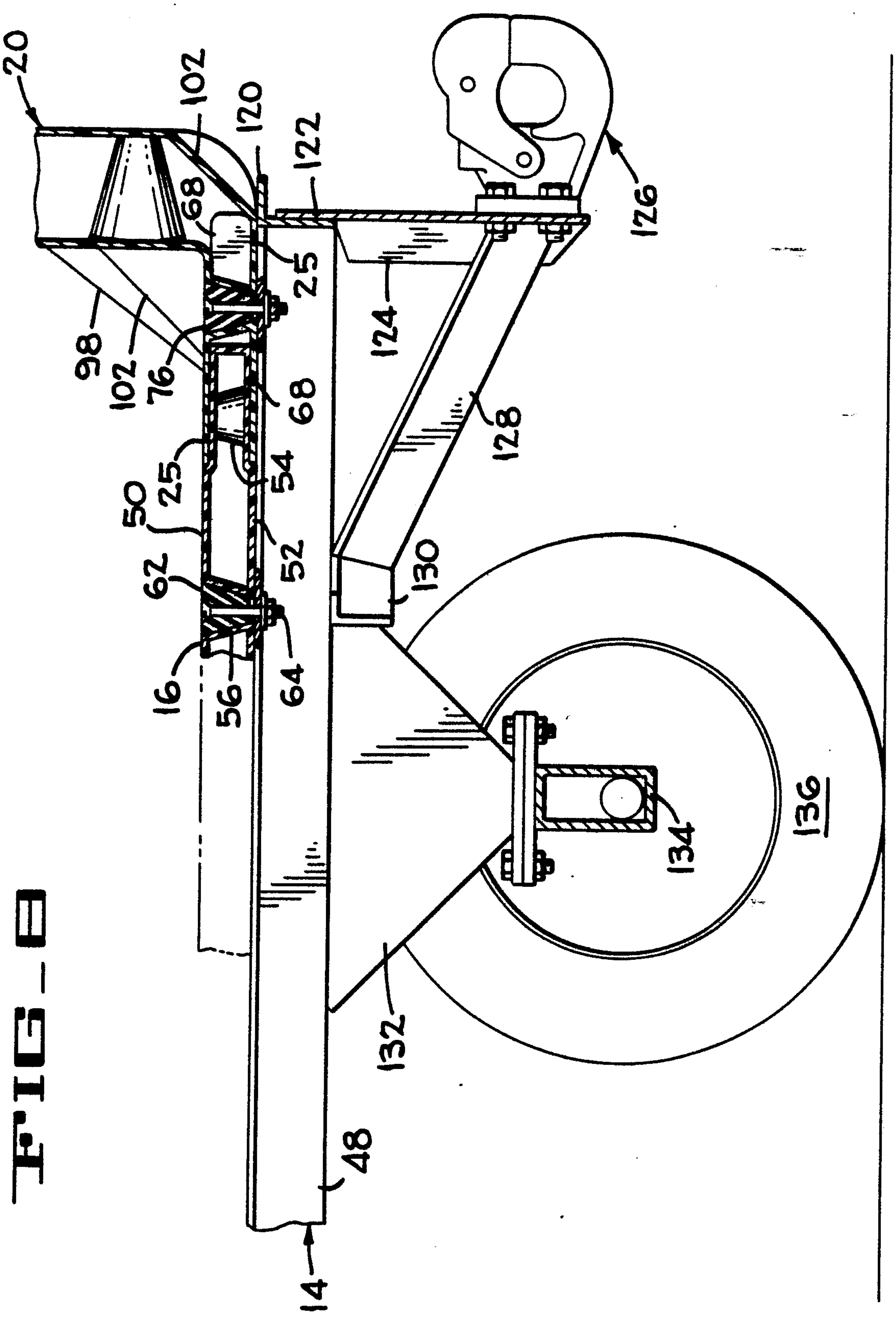
20
102
120
122
126
68
25
98
102
76
124
68
128
25
54
50
52
130
62
16
56
64
134
136
132
48
14

FIG_8

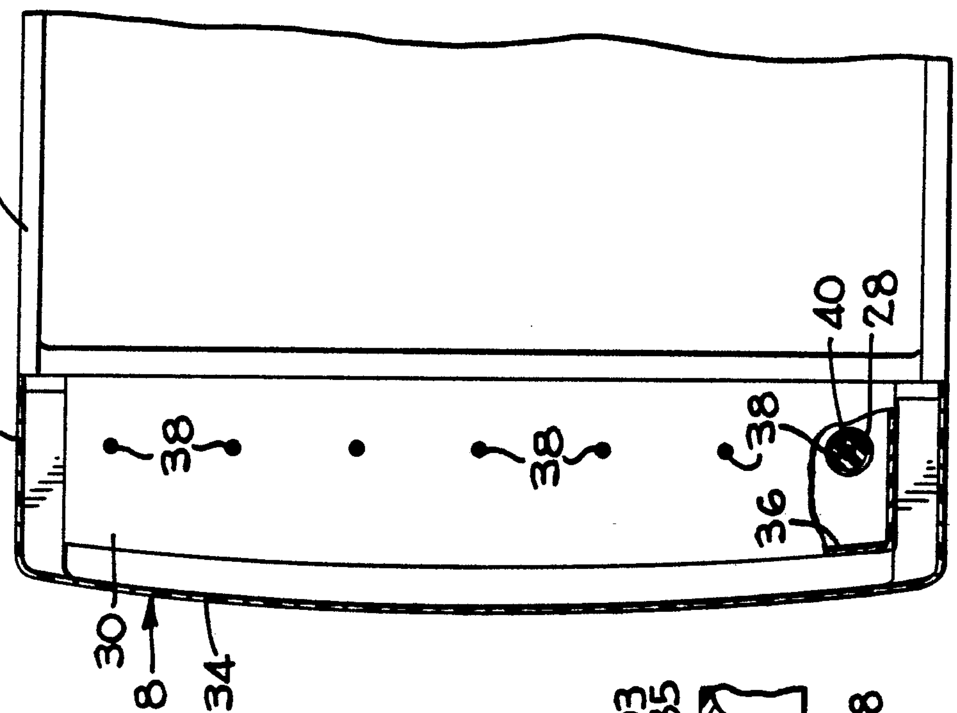

FIG_10

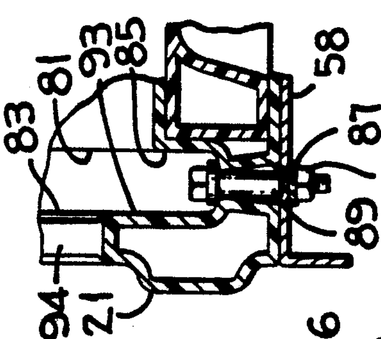

FIG_11

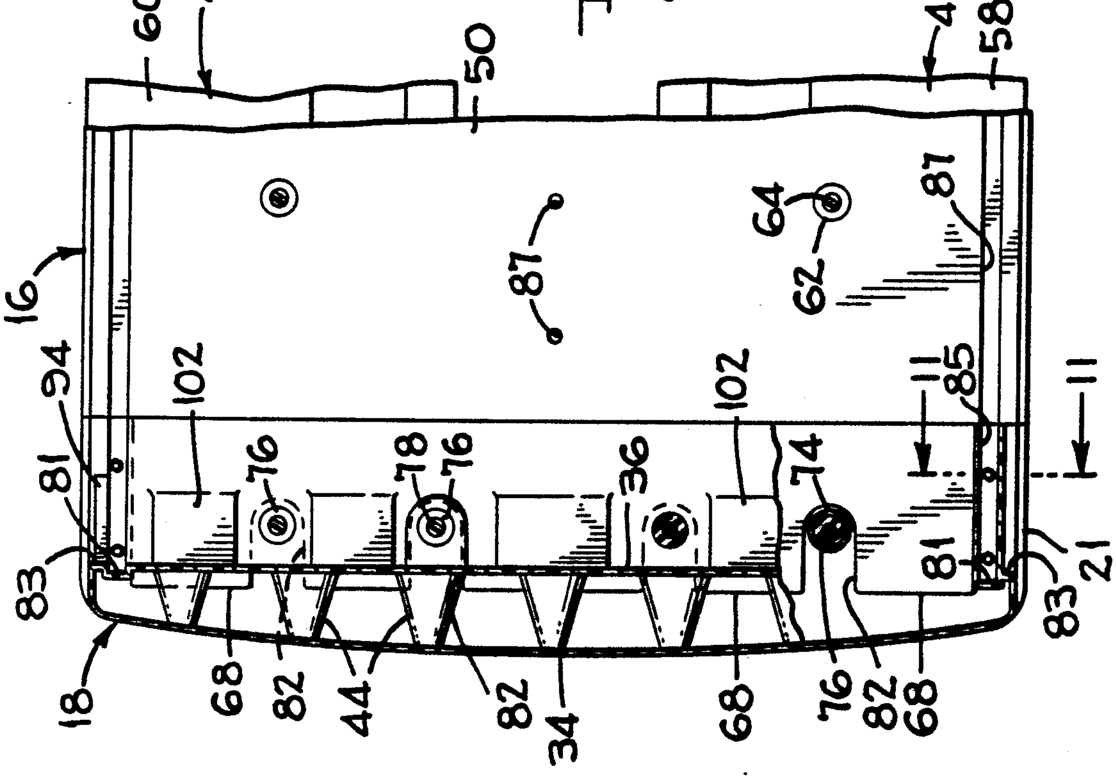

FIG_9